# EUROPÄISCHE PATENTSCHRIFT

(11) **EP 1 756 439 B1**
(45) Veröffentlichungstag und Bekanntmachung des Hinweises auf die Patenterteilung: **29.07.2009**
(21) Anmeldenummer: 05753170.9
(22) Anmeldetag: 08.06.2005
(51) Int. Cl.: F16C 11/06, B60G 7/00

(54) **ZENTRALGELENK FÜR EINEN DREIECKSLENKER VON KRAFTFAHRZEUGEN**
CENTRAL JOINT FOR AN A-ARM OF MOTOR VEHICLES
ARTICULATION CENTRALE POUR LEVIER TRIANGULAIRE DE VEHICULES A MOTEUR

(30) Priorität: 18.06.2004 DE 102004029581
(43) Veröffentlichungstag der Anmeldung: 28.02.2007
(73) Patentinhaber: ZF Friedrichshafen AG, 88038 Friedrichshafen (DE)
(72) Erfinder: KUNZE, Ralf, 49152 Bad Essen (DE); KNOPP, Sören, 49179 Ostercappeln (DE); BUHL, Manfred, 49143 Bissendorf (DE)
(86) Internationale Anmeldenummer: PCT/DE2005/001010
(87) Internationale Veröffentlichungsnummer: WO 2005/124169

(56) Entgegenhaltungen:
- EP-A- 0 702 161
- EP-A- 0 924 441
- EP-A- 1 124 086
- EP-A- 1 418 349
- WO-A-99/09328
- WO-A-99/28636
- WO-A-20/04083660
- DE-A1- 2 350 087
- DE-A1- 4 420 489
- FR-A- 2 833 321
- GB-A- 2 103 532
- GB-A- 2 159 207
- US-A- 6 113 303
- US-B1- 6 302 615

## Beschreibung

Die Erfindung betrifft eine Lagerung von Dreieckslenkern zur Führung von Hinterachsen, insbesondere von Nutzfahrzeugen, vorzugsweise der zentralen Lagerung des Dreieckslenkers an der Hinterachse.

Derartige Dreieckslenker werden insbesondere zur Führung von Hinterachsen von Nutzfahrzeugen verwendet, wobei zwei Streben, die einenends gelenkig am Fahrzeugaufbau angelenkt und an ihrem anderen Ende mittels eines zentralen Gelenkes gelenkig mit der Hinterachse des Fahrzeuges verbunden sind. Dabei sind die beiden Streben über ein gemeinsames Gelenkgehäuse verbunden, in welchem eine Gelenkkugel, welche über einen Kugelzapfen mit der Achse fest verbunden ist, schwenkbeweglich gelagert ist.

Eine derartige Anordnung ist beispielsweise in der DE 23 50 087 A1 gezeigt, wobei zur schwenkbeweglichen Lagerung zwischen Gelenkgehäuse und Gelenkkugel eine Lagerschale angeordnet ist. Der Kugelzapfen besteht dabei aus einer Gelenkkugel mit einer kegelförmigen Ausnehmung, welche mit einer ebenfalls kegelförmigen Fläche eines Kugelzapfenkörpers in Wirkverbindung steht. Gelenkkugel und Kugelzapfenkörper werden dabei mittels einer Schraubverbindung verbunden, wobei die Schraube durch eine abgesetzte Durchgangsbohrung der Gelenkkugel geführt ist und in ein im Kugelzapfenkörper angeordnetes Gewinde eingreift. Bedingt durch die Verschraubung von der Gelenkkugelseite her ist es erforderlich, im Gelenkgehäuse einen Deckel anzuordnen, um einen Zugang zur Schraubverbindung zu schaffen. Der Gelenkgehäuseboden wird somit durch ein separates Bauteil gebildet. Hierdurch sind in nachteiliger Weise zusätzliche Bauteile, wie beispielsweise zusätzliche Dicht- und Verbindungselemente notwendig, die den Montageaufwand und die Kosten erhöhen und zudem wird eine mögliche Leckagestelle des Zentralgelenks geschaffen.

Die WO 2004/083660 A1 zeigt ferner ein Zentralgelenk für einen Dreiecklenker eines Kraftfahrzeuges mit einem in einem in einem Gelenkgehäuse aufgenommenen Kugelzapfen wobei das Gelenkgehäuse einstückig aus einem Gelenkgehäusekörper und einem Gelenkgehäuseboden gebildet ist. Der Kugelzapfen ist aus einem zylindrischen turmförmigen Kugelzapfenkörper und einer auf den Kugelzapfenkörper aufgesetzten Gelenkkugel gebildet. Der Kugelzapfen ist dabei in einer in dem Gelenkgehäuse festgelegten Lagerschale schwenk- und drehbeweglich gelagert. Die Gelenkkugel ist dabei in nachteiliger Weise mit dem Kugelzapfenkörper mittels einer indirekten Verschraubung verbunden, wobei zwei zusätzliche Sicherungs- oder Haltelemente, eine Haltescheibe und eine Sicherungsring, notwendig sind. Dies erfordert einen zusätzlichen fertigungstechnischen und logistischen Aufwand, insbesondere auch in Hinblick auf die Einhaltung erforderlicher Toleranzen bezüglich einer Maß- und Wiederholgenauigkeit. Darüber hinaus offenbaren die DE 44 20 489 A1 und US 6,113,303 Zentralgelenke für Dreieckslenker mit einer eine konischen Verbindung von Gelenkkugel, und Kugelzapfenkörper, wobei die Sicherung der Verbindung mit einer Schraubverbindung oder einer plastischen Verformung des Kugelzapfenkörpers gewährleistet wird. Nachteilig ist hier insbesondere die geringe radiale Überdeckung der Lagerfläche zwischen Lagerschale und Gelenkkugel mit der Kontaktfläche der Gelenkkugel und dem Kugelzapfenkörper, so dass die Tragfähigkeit bzw. mögliche Belastung der Gelenkverbindung eingeschränkt ist.

Des Weiteren zeigen die Schriften EP 0 924 441 A1, US 6,302,615 B1) und FR 2 833 321 Kugelgelenke mit einem geschlossenen Kugelgelenkgehäuse, wobei der Gelenkgehäusekörper mit dem Gelenkgehäuseboden jeweils einstückig ausgebildet ist

Aufgabe der Erfindung ist es daher, ein Zentralgelenk für einen Dreieckslenker dahingehend weiterzubilden, dass der Aufbau und damit der Montageaufwand vereinfacht wird und zudem eine verbesserte Dichtfunktion des Zentralgelenkes geschaffen wird.

Die Aufgabe wird durch ein Zentralgelenk für einen Dreieckslenker von Kraftfahrzeugen mit den Merkmalen des Hauptanspruchs gelöst. Vorteilhafte Aus- bzw. Weiterbildungen sind durch die Unteransprüche gegeben.

Für ein Zentralgelenk für einen Dreieckslenker von Kraftfahrzeugen, insbesondere Nutzfahrzeugen, mit einem in einem Gelenkgehäuse schwenk- und drehbeweglich gelagerten Kugelzapfen, wobei das Gelenkgehäuse einstückig aus einem Gelenkgehäusekörper und einem Gelenkgehäuseboden gebildet ist und der Kugelzapfen aus einem turmförmigen Kugelzapfenkörper und einer auf den Kugelzapfenkörper aufgesetzten Gelenkkugel gebildet ist sowie einer in dem Gelenkgehäuse festgelegten Lagerschale, wird erfindungsgemäß vorgeschlagen, mittels einer Schraubverbindung die Gelenkkugel gegen einen Anschlag festzusetzen, wobei der Anschlag durch eine beispielsweise plangedrehte Fläche des zylindrischen Endes des turmförmigen Kugelzapfenkörpers gebildet wird wobei der Gelenkkugelboden der Gelenkkugel gegen die Stirnfläche des zylindrischen Endes des Kugelzapfenkörpers zur Anlage kommt. Dieser Anschlag stellt in Verbindung mit einer Anschlagfläche innerhalb der zylindrischen Ausnehmung der Gelenkkugel vorteilhaft ein definiertes und wiederholgenaues Maß für die Lage der Gelenkkugel gegenüber dem Kugelzapfenkörper dar. Dadurch werden separate Bauteile sowie Trennungsfugen im Bereich des Gelenkgehäuses vermieden, so dass sich der Montageaufwand gegenüber dem Stand der Technik erheblich vereinfachen lässt und zudem ein dichtes Gelenkgehäuses auf Grund fehlender Dichtfugen gewährleistet werden kann. Insbesondere bei Nutzfahrzeugen wird der Anbindungsbereich des Dreieckslenkers an die Achse verstärkt durch Schmutz und Feuchtigkeit beeinträchtigt, so dass der Dichtfunktion eine gesteigerte Bedeutung zukommt.

Bei der gattungsgemäßen Ausführung sind Gelenkkugel und der Kugelzapfenkörper mittels einer Schraubverbindung miteinander verbunden, wobei der Kugelzapfenkörper auf seinem der Gelenkkugel zugewandtem Ende zylindrisch geformt ist und dieses Ende in eine ebenfalls zylindrische Ausnehmung der Gelenkkugel eingesetzt ist. Der Durchmesser des zylindrischen Endes des Kugelzapfenkörpers ist dabei größer als der Innendurchmesser der zylindrischen Ausnehmung der Gelenkkugel, so dass zwischen der Gelenkkugel und dem Kugelzapfenkörper über den Bereich der gemeinsamen Anlage eine gleichmäßige Flächenpressung mit einer geringen Verspannung des Pressverbandes ohne nennenswerte Spannungsspitzen, wodurch die zulässigen Betrieblasten gegenüber beispielsweise einem Kegelpressverband erheblich erhöht sein können. Es entsteht somit auch keine Kerbwirkung, die sich lebensdauermindernd auf den turmförmigen Kugelzapfen auswirken könnte. Zudem wird durch die gleichmäßige Flächenpressung die Gelenkkugel in radialer Richtung auch gleichmäßig aufgeweitet, so dass keine ungleichmäßigen Verspannungen in der Gleitpaarung Lagerschale und Gelenkkugel auftreten können. Vielmehr ist die Lagerschale gleichmäßig vorgespannt.

Die Schraubverbindung wird in vorteilhafter Weise mittels eines Gewindestiftes gebildet, welcher eine Durchgangsbohrung des Kugelzapfenskörpers durchgreift, einenends mit einer Gewindebohrung in der Gelenkkugel zusammenwirkt und auf der der Gelenkkugel abgewandte Seite mit einer Gewindemutter gegenüber dem Kugelzapfenkörper festgesetzt ist. Die Gewindebohrung in der Gelenkkugel weist dabei vorteilhaft einen Absatz auf, gegen den der Gewindestift in die Gewindebohrung eingeschraubt ist, wobei die Gewindebohrung innerhalb einer in dem Gelenkkugelboden ausgebildeten Materialverdickung, welche sich im montierten Zustand der Gelenkkugel innerhalb einer Ausnehmung des zylindrischen Endes des Kugelzapfenkörpers befindet, angeordnet ist. Die Gewindemutter wiederum ist im Montagezustand in vorteilhafter Weise ebenfalls in einer Ausnehmung, welche sich auf der dem zylindrischen Ende abgewandten Seite des Kugelzapfenkörpers befindet, angeordnet. Die Gewindemutter weist für eine vereinfachte Montage und Demontage des Zentralgelenkes zudem einen verlängerten tragenden Gewindebereich auf, welcher in einer bevorzugten Ausführung innerhalb eines erweiterten Bereiches der Durchgangsbohrung befindet. Diese Anordnung ermöglicht einen in der Höhe verringerten Aufbau, da die Schraubverbindung im wesentlichen vollständig innerhalb der zu verbindenden Bauteile angeordnet ist, zudem weist die Gelenkkugel eine vergrößerte Überdeckung mit dem turmförmigen Kugelzapfenkörper. Der verlängerte tragende Gewindebereich erhöht außerdem in vorteilhafter Weise die Tragfähigkeit der Schraubverbindung. Weiterhin ist in vorteilhafter Weise in axialer Erstreckung der Lagerschale eine vollständige radiale Überdeckung der Lagerfläche zwischen Lagerschale und Gelenkkugel mit der Kontaktfläche der Gelenkkugel und dem Kugelzapfenkörper gegeben.

Zur Verbesserung der Gleiteigenschaften zwischen Lagerschale und Gelenkkugel kann zwischen der Lagerschale und der Gelenkkugel eine Gleitschicht, vorzugsweise aus Kunststoff angeordnet werden.

Vorteilhaft wird die Lagerschale mittels eines zumindest einseitig konusförmig ausgebildeten Sicherungsringes, welcher in eine Nut mit einer zumindest einseitigen konusförmigen Ausbildung im Gehäuse eingreift, spielfrei im Gelenkgehäuse angeordnet.

Die Erfindung soll nachfolgend anhand eines Ausführungsbeispiels nochmals näher erläutert werden. In der zugehörigen Zeichnung zeigen:

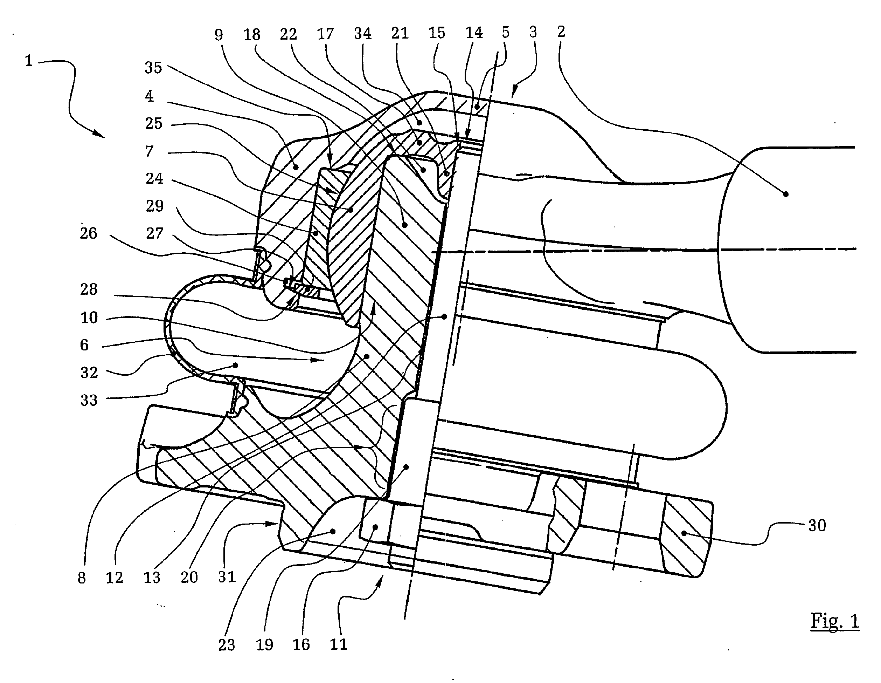

- Figur 1:: eine Schnittdarstellung eines Zentralgelenks für einen Dreieckslenker für ein Kraftfahrzeug,

In Figur 1 ist in einer Schnittdarstellung ein Zentralgelenk 1 eines Dreieckslenkers dargestellt, welches zwei Streben 2 (hier nur eine Strebe gezeigt) miteinander über ein Gelenkgehäuse 3 verbindet. Das aus einem Gelenkgehäusekörper 4 und einem Gelenkgehäuseboden 5 aufgebaute Gelenkgehäuse 3 ist einstückig, beispielsweise aus einem metallischen Gusswerkstoff, ausgebildet. In dem Gelenkgehäuse 3 ist ein Kugelzapfen 6 dreh- und schwenkbeweglich angeordnet, wobei der Kugelzapfen 6 eine Gelenkkugel 7 und einen Kugelzapfenkörper 8 aufweist. Der Kugelzapfenkörper 8 weist ein zylindrisches Ende 9 auf, dass in einer ebenfalls zylindrischen Ausnehmung 10 der Gelenkkugel 7 eingesetzt ist. Dabei weist das zylindrische Ende 9 des Kugelzapfenkörpers 8 einen größeren Durchmesser als die zylindrische Ausnehmung 10 der Gelenkkugel 7 auf, so dass zwischen der Gelenkkugel 7 und dem Kugelzapfenkörper 8 eine Presspassung vorliegt. Anstatt der zylindrischen Form der Ausnehmung 10 und des Endes 9 des Kugelzapfenkörpers 8 kann auch jede andere formschlüssige Verbindung gewählt werden, beispielsweise eine mehreckige (Sechseck, Achteck u.a.) oder polygone formschlüssige Verbindung.

Die Gelenkkugel 7 und der Kugelzapfenkörper 8 sind mittels einer Schraubverbindung 11 miteinander verbunden. Die Schraubverbindung 11 ist dabei aus einem Gewindestift 12 gebildet, welcher eine Durchgangsbohrung 13 des Kugelzapfenkörpers 8 durchgreift und in eine Gewindebohrung 14 in der Gelenkkugel 7 bis gegen einen Anschlag 15 innerhalb der Gewindebohrung 14 eingeschraubt ist, sowie einer Gewindemutter 16, welche auf der Gelenkkugel 7 abgewandten Seite des Kugelzapfenkörpers 8 auf den Gewindestift 12 aufgeschraubt und gegen den Kugelzapfenkörper 8 geschraubt ist. Die Gelenkkugel 7 ist somit auf den Kugelzapfenkörper 8 aufgesetzt und zwar so, dass die Gelenkkugel 7 mit ihrem Gelenkkugelboden 17 gegen eine beispielsweise plangedrehte Stirnfläche 18 des zylindrischen Endes 9 des Kugelzapfenkörpers 8 zur Anlage kommt. Auf diese Weise ist ein stets wiederholbares und sehr genau bestimmbares Montagemaß gegeben.

Die Gewindemutter 16 weist einen verlängerten tragenden Gewindebereich 19 auf, welcher im Montagezustand in einem Bereich 20 mit vergrößertem Durchmesser der Durchgangsbohrung 13 angeordnet ist.

Die Gewindebohrung 14 ist innerhalb einer Materialverdickung 21 des Gelenkkugelbodens 17 angeordnet, wobei die Materialverdickung 21 ihrerseits im Montagezustand innerhalb einer Ausnehmung 22 des Kugelzapfenkörpers 8 angeordnet ist. Im Montagezustand ist die Gewindemutter 16 in einer weiteren auf der der Ausnehmung 22 abgewandten Seite des Kugelzapfenkörpers 8 angeordenten Ausnehmung 23 des Kugelzapfenskörpers 8 angeordnet. Da der Gewindestift 12 nicht länger als der Aufbau des Kugelzapfenkörpers 8 und der Gelenkkugel 7, ist die gesamte Schraubverbindung 11 innerhalb des Kugelzapfens 6 angeordnet, womit insgesamt ein sehr kompakter Aufbau entsteht.

Zur schwenkbeweglichen Lagerung des Kugelzapfens 6 im Gelenkgehäuse 3 ist zwischen der Gelenkkugel 7 und dem Gelenkgehäusekörper 4 eine Lagerschale 24, welche in diesem Ausführungsbeispiel vorzugsweise aus einem metallischen Werkstoff besteht, angeordnet. Zur Verbesserung der Gleiteigenschaften ist auf der Lagerschale 24 eine zusätzliche Gleitschicht 25, vorzugsweise aus einem Kunststoff, vorgesehen, welche zwischen der Lagerschale 24 und der Gelenkkugel 7 wirkt. Die Lagerschale 24 wird mittels einem keilförmigen Sicherungsrings 26 in dem Gelenkgehäuse 3 gehalten. Der Sicherungsring 26 greift dabei in eine Nut 27 ein und weist eine konische von der Lagerschale 24 abgewandte Außenfläche 28 auf, die mit einer ebenfalls konisch ausgebildeten Innenwandung 29 der Nut 27 zusammenwirkt, so dass die Lagerschale 24 im Gelenkgehäuse 3 spielfrei gehalten ist.

Der Kugelzapfenkörper 8 weist einen Flansch 30 auf, an welchem des Weiteren ein Zentrieransatz 31 zur genauen Positionierung des Zentralgelenkes 1 an einer Achse angeordnet ist. Zwischen Flansch 30 und Gelenkgehäuse 3 ist zudem ein Dichtungsbalg 32 vorgesehen. Der vom Dichtungsbalg 32 umschlossene Raum 33 als auch der zwischen dem Gelenkkugelboden 17 und dem Gelenkgehäuseboden 5 verbleibende Raum 34 kann mit einem Schmiermittel gefüllt sein.

Da das zylindrische Ende 9 des Kugelzapfenkörpers 8 sehr weit in die Ausnehmung 10 der Gelenkkugel 7 eingreift und zwar bis hin zum Gelenkkugelboden 17, besteht in axialer Erstreckung eine radiale Überdeckung von der Wirkfläche bzw. Reibfläche zwischen der Lagerschale 24 und der Gelenkkugel 7 mit der Kontaktfläche zwischen der Gelenkkugel 7 und dem zylindrischen Ende 9 des Kugelzapfenkörpers 8. Dies trägt zu einer verbesserten Übertragung der wirkenden Kräfte zwischen dem Gelenkgehäuse 3 und dem Kugelzapfen 6 bei. Zudem weitet sich durch diese Form der Verbindung von Gelenkkugel 7 und Kugelzapfenkörper 8 z.B. durch eine über die axiale Erstreckung der zylindrischen Verbindung gleichförmige Pressverbindung die Gelenkkugel 7 radial gleichmäßig auf, so dass die Vorspannung zwischen der Lagerschale 24 und der Gelenkkugel 25 über die Fläche der Lagerschale 24 auch gleichmäßig verteilt ist.

In einem ersten Arbeitsschritt wird die Gleitschicht 25 auf die Lagerschale 24 aufgebracht, beispielsweise geklebt. Die so vorgefertigte Lagerschale 24 wird anschließend über die Gelenkkugel 7 gestülpt und gegen die Gelenkkugel 7 verpreßt, so dass die Lagerschale 24 an der Gelenkkugel 7 anliegt. Die Lagerschale 24 wird damit an die Gelenkkugel 7 angeformt. Diese Anformung kann beispielsweise aber auch erst dann erfolgen, wenn die Lagerschale 24 zusammen mit der Gelenkkugel 7 in das Gelenkgehäuse 3 eingesetzt wird. In einem nächsten Schritt wird eine Warmbehandlung durchgeführt, dabei wird die in diesem Ausführungsbeispiel aus einem Kunststoff bestehende Gleitschicht 25 "ausgebacken", d.h. die Gleitschicht 25 erhält unter bestimmten Temperaturen in Abhängigkeit der Parameter Zeit und Druck ihre endgültigen Festigkeits-, Reib- und Verschleißeigenschaften.

Die so vorgefertigte Einheit aus Gelenkkugel 7 und Lagerschale 24 wird nun in das Gelenkgehäuse 3 bis gegen eine Anlage an einer Gehäuseschulter 35 eingepreßt. Die Lagerschale 24 wird anschließend mittels des in die Nut 27 eingesetzten keilförmigen Sicherungsringes 26 spielfrei im Gelenkgehäuse fixiert. Zunächst wird nun der Gewindestift 12 in die Gewindebohrung 14 bis gegen den Anschlag 15, welcher beispielsweise durch eine Verformung der Gewindegänge ausgebildet ist, eingeschraubt und in einem weiteren Arbeitsschritt der Dichtungsbalg 32 am Gelenkgehäuse 3 befestigt, ggf. mit weiteren Hilfsmitteln wie beispielsweise Sicherungsringen oder Klemmschellen, die hier nicht näher dargestellt sind.

Im Weiteren wird nun der Kugelzapfenkörper 8 über den Gewindestift 12 gesteckt. Nun wird die Gewindemutter 16 auf den Gewindestift 12 aufgeschraubt, bis sie am Kugelzapfenkörper 8 zur Anlage kommt. Dieser Arbeitschritt kann beispielsweise von Hand erfolgen. Bei Aufdrehen der Gewindemutter 16 auf den Gewindestift 12 wird dabei zuerst der verlängerte Gewindebereich 19 der Gewindemutter 16 einige Gewindegänge auf den Gewindestift 12 aufgeschraubt. Der Gewindestift 12 befindet sich bei dem lediglich an die Gelenkkugel 7 angesetzten Kugelzapfenkörper 8 hoch vollständig in der Durchgangsbohrung 13, lediglich das der Gewindemutter 16 zugewandte Ende des Gewindestiftes 12 kommt in dem Durchmesservergrößerten Bereich 20 der Durchgangsbohrung 13 zu liegen, so dass die Gewindemutter 16 den Gewindestift 12 fassen kann. Nun wird mit einem Werkzeug die Gewindemutter 16 weitergedreht, so dass der Kugelzapfenkörper 8 soweit in die Ausnehmung 10 der Gelenkkugel 7 gezogen wird, bis die Stirnfläche 18 des Kugelzapfenkörpers 8 am Gelenkkugelboden 17 zur Anlage kommt. Hier wird die Gewindemutter 16 nach einer Drehmomentenvorgabe festgezogen. Abschließend wird der Dichtungsbalg 32 mit einer beispielsweise Klemmschelle (nicht näher dargestellt) am Flansch 30 des Kugelzapfenkörpers 8 befestigt und das Zentralgelenk 1 ggf. mit einem Schmiermittel befüllt.

Auf Grund des verlängerten Gewindebereiches 19 der Gewindemutter 16, welcher im montierten Zustand innerhalb des Kugelzapfenkörpers 8 angeordnet ist, kann der Gewindestift 12 sehr kurz ausgeführt werden. Hierdurch ist es möglich, die Bauhöhe des Zentralgelenkes 1 klein zu halten und das Zentralgelenk 1 insgesamt sehr kompakt aufzubauen.

Das so gefertigte Zentralgelenk 1 stellt zusammen mit den Streben 8 eine Baueinheit dar, die über den Zentrieransatz 31 an eine Achse montiert werden kann.

Die hier beschriebene Montagereihenfolge stellt ausdrücklich nur eine mögliche Abfolge der Arbeitschritte zur Fertigung des Zentralgelenkes 1 dar. Es sind selbstverständlich hiervon abweichende Montagereihenfolgen denkbar und auch ausführbar.

Durch die einstückige Ausführung des Gelenkgehäuse 3 entstehen im Bereich des Gelenkgehäusebodens 5 keinerlei Dichtungsprobleme gegenüber dem Gelenkgehäusekörper 4, da in diesem Bereich keine Dichtfugen vorhanden sind. Ferner können auch zusätzliche Bauteile, beispielsweise Verbindungselemente wie Schrauben oder Nieten und Dichtringe vollständig entfallen. Die im Ausführungsbeispiel gezeigte Gussausführung des Gelenkgehäuses 3 stellt lediglich eine mögliche Variante der einstückigen Ausführung dar. Daneben ist es selbstverständlich auch denkbar, den Gelenkgehäuseboden 5 mit dem Gelenkgehäusekörper 4 mittels einer Schweißung zu verbinden oder das Gelenkgehäuse 3 einstückig spanend zu fertigen oder als Schmiedegehäuse auszubilden.

### Bezugszeichenliste

- 1: Zentralgelenk
- 2: Strebe
- 3: Gelenkgehäuse
- 4: Gelenkgehäusekörper
- 5: Gelenkgehäuseboden
- 6: Kugelzapfen
- 7: Gelenkkugel
- 8: Kugelzapfenkörper
- 9: zylindrisches Ende des Kugelzapfenkörpers
- 10: zylindrische Ausnehmung
- 11: Schraubverbindung
- 12: Gewindestift
- 13: Durchgangsbohrung
- 14: Gewindebohrung
- 15: Anschlag
- 16: Gewindemutter
- 17: Gelenkkugelboden
- 18: Stirnfläche
- 19: verlängerter Gewindebereich
- 20: durchmesservergrößerter Bereich
- 21: Materialverdickung
- 22: Ausnehmung
- 23: Ausnehmung
- 24: Lagerschale
- 25: Gleitschicht
- 26: Sicherungsring
- 27: Nut
- 28: konische Außenfläche
- 29: konische Innenwandung
- 30: Flansch
- 31: Zentrieransatz
- 32: Dichtungsbalg
- 33: Raum
- 34: Raum
- 35: Gehäuseschulter

## Patentansprüche

1. Zentralgelenk (1) für einen Dreieckslenker von Kraftfahrzeugen, insbesondere Nutzfahrzeugen, mit einem in einem Gelenkgehäuse (3) aufgenommenen Kugelzapfen (6), wobei:
- das Gelenkgehäuse (3) aus einem Gelenkgehäusekörper (4) und einem Gelenkgehäuseboden (5) gebildet ist und
- der Kugelzapfen (6) aus einem turmförmigen Kugelzapfenkörper (8) und einer auf den Kugelzapfenkörper (8) aufgesetzten Gelenkkugel (7) gebildet ist wobei der Kugelzapfenkörper (8) auf seinem der Gelenkkugel (7) zugewandten Ende (9) zylindrisch geformt ist und dieses Ende (9) in eine ebenfalls zylindrisch geformte Ausnehmung (10) der Gelenkkugel (7) eingesetzt ist und
- der Kugelzapfen (6) in einer in dem Gelenkgehäuse (7) festgelegten Lagerschale (24) schwenk- und drehbeweglich gelagert ist und
- das Gelenkgehäuse (3) aus dem Gelenkgehäusekörper (4) und dem Gelenkgehäuseboden (5) einstückig ausgebildet ist und
- die Gelenkkugel (7) mit dem Kugelzapfenkörper (8) mittels einer Schraubverbindung (11) verbunden ist
**dadurch gekennzeichnet, dass**
das zylindrische Ende (9) des Kugelzapfenkörpers (8) mit einer Stirnfläche (18) einen Anschlag für die Aufnahme der Gelenkkugel (7) bildet, so dass der Gelenkkugelboden (17) der Gelenkkugel (7) gegen eine Stirnfläche (18) des zylindrischen Endes (9) des Kugelzapfenkörpers (8) zur Anlage kommt.

2. Zentralgelenk für einen Dreieckslenker nach Anspruch 1,
**dadurch gekennzeichnet, dass**
der Kugelzapfenkörper (8) und die Gelenkkugel (7) über eine formschlüssige Verbindung, insbesondere ein Kerbzahnprofil, ein Polygonprofil oder ein Merkeckprofil, miteinander in Wirkverbindung stehen.

3. Zentralgelenk für einen Dreieckslenker nach Anspruch 1,
**dadurch gekennzeichnet, dass**
der Durchmesser des zylindrischen Endes (9) des Kugelzapfenkörpers (8) größer ist als der Innendurchmesser der zylindrischen Ausnehmung (10) der Gelenkkugel (7).

4. Zentralgelenk für einen Dreieckslenker nach Anspruch 1 oder 2,
**dadurch gekennzeichnet, dass**
zwischen dem Kugelzapfenkörper (8) und der Gelenkkugel (7) eine Pressverbindung wirkt.

5. Zentralgelenk für einen Dreieckslenker nach Anspruch 1,
**dadurch gekennzeichnet, dass**
die Schraubverbindung (11) von einem Gewindestiftes (12) gebildet wird, welcher eine Durchgangsbohrung (13) des Kugelzapfenskörpers (8) durchgreift, einenends mit einer Gewindebohrung (14) in der Gelenkkugel (7) zusammenwirkt und auf der der Gelenkkugel (7) abgewandten Seite des Kugelzapfenkörpers (8) mit einer Gewindemutter (16) gegenüber dem Kugelzapfenkörper (8) festgesetzt ist.

6. Zentralgelenk für einen Dreieckslenker nach Anspruch 5,
**dadurch gekennzeichnet, dass**
die Gewindebohrung (14) in der Gelenkkugel (7) einen Anschlag (15) aufweist, gegen den der Gewindestift (12) in die Gewindebohrung (14) eingeschraubt ist.

7. Zentralgelenk für einen Dreieckslenker nach Anspruch 5,
**dadurch gekennzeichnet, dass**
die Gewindebohrung (14) im Bereich einer Materialverdickung (21) eines Gelenkkugelbodens (17) der Gelenkkugel (7) angeordnet ist, wobei der Kugelzapfenkörper (8) an seinem zylindrischen Ende (9) eine Ausnehmung (22) aufweist, innerhalb derer im Montagezustand vorzugsweise die Materialverdickung (21) angeordnet ist.

8. Zentralgelenk für einen Dreieckslenker nach Anspruch 5,
**dadurch gekennzeichnet, dass**
die Gewindemutter (16) einen verlängerten Gewindebereich (19) aufweist:

9. Zentralgelenk für einen Dreieckslenker nach Anspruch 5 oder 8
**dadurch gekennzeichnet, dass**
die Gewindemutter (16) im montierten Zustand im wesentlichen innerhalb einer Ausnehmung (23) des Kugelzapfenkörpers (8) angeordnet ist.

10. Zentralgelenk für einen Dreieckslenker nach Anspruch 1;
**dadurch gekennzeichnet, dass**
der verlängerte tragende Gewindebereich (19) der Gewindemutter (16) im Montagezustand innerhalb eines durchmessererweiterten Bereiches (20) der Durchgangsbohrung (13) angeordnet ist.

11. Zentralgelenk für einen Dreieckslenker nach Anspruch 1,
**dadurch gekennzeichnet, dass**
der Kugelzapfen (6) an seinem der Gelenkkugel (7) abgewandten Ende einen Flansch (30) mit einem Zentrieransatz (31) aufweist.

12. Zentralgelenk für einen Dreieckslenker nach Anspruch 1,
**dadurch gekennzeichnet, dass**
zwischen der Lagerschale (24) und der Gelenkkugel (7) eine Gleitschicht (25), vorzugsweise aus einem Kunststoff, angeordnet ist.

13. Zentralgelenk für einen Dreieckslenker nach einem der Anspruch 1 bis 9,
**dadurch gekennzeichnet, dass**
die Lagerschale (7) mittels eines zumindest mit einer einseitig konusförmig ausgebildeten Außenfläche (28) ausgebildeten Sicherungsringes (26), welcher in eine Nut (27) mit einer zumindest einseitigen konusförmigen Innenwandung (29) im Gelenkgehäuse (3) eingreift, spielfrei im Gelenkgehäuse (3) angeordnet ist.

## Claims

1. Central joint (1) for a wishbone of motor vehicles, in particular commercial vehicles, with a ball stud (6) which is accommodated in a joint housing (3), wherein:
- the joint housing (3) is formed from a joint housing body (4) and a joint housing base (5) and
- the ball stud (6) is formed from a turret-shaped ball stud body (8) and a joint ball (7) which is placed on the ball stud body (8), wherein the ball stud body (8) has a cylindrical shape at its end (9) which faces the joint ball (7), and this end (9) is inserted into a likewise cylindrically shaped recess (10) in the joint ball (7), and
- the ball stud (6) is mounted in a pivotable and rotatable manner in a bearing shell (24) which is fixed in the joint housing (7), and
- the joint housing (3) is formed in one piece from the joint housing body (4) and the joint housing base (5) and
- the joint ball (7) is connected to the ball stud body (8) by means of a screw-connection (11)
**characterised in that**
the cylindrical end (9) of the ball stud body (8) with an end face (18) forms a stop for receiving the joint ball (7) so that the joint ball base (17) of the joint ball (7) comes to bear against an end face (18) of the cylindrical end (9) of the ball stud body (8).

2. Central joint for a wishbone according to Claim 1,
**characterised in that**
the ball stud body (8) and the joint ball (7) are in functional connection with each other by means of a form-fitting connection, in particular a serrated profile or a polygonal profile.

3. Central joint for a wishbone according to Claim 1,
**characterised in that**
the diameter of the cylindrical end (9) of the ball stud body (8) is greater than the internal diameter of the cylindrical recess (10) of the joint ball (7).

4. Central joint for a wishbone according to Claim 1 or 2,
**characterised in that**
an interference connection acts between the ball stud body (8) and the joint ball (7).

5. Central joint for a wishbone according to Claim 1,
**characterised in that**
the screw-connection (11) is formed by a threaded pin (12) which engages through a through-bore (13) in the ball stud body (8), interacts at one end with a threaded bore (14) in the joint ball (7) and is fixed with respect to the ball stud body (8) with a threaded nut (16) on the side of the ball stud body (8) which faces away from the joint ball (7).

6. Central joint for a wishbone according to Claim 5,
**characterised in that**
the threaded bore (14) in the joint ball (7) has a stop (15), against which the threaded pin (12) is screwed into the threaded bore (14).

7. Central joint for a wishbone according to Claim 5,
**characterised in that**
the threaded bore (14) is arranged in the region of a material thickness (21) of a joint ball base (17) of the joint ball (7), wherein the ball stud body (8) has a recess (22) on its cylindrical end (9), within which recess the material thickness (21) is preferably arranged in the mounted state.

8. Central joint for a wishbone according to Claim 5,
**characterised in that**
the threaded nut (16) has an extended threaded region (19).

9. Central joint for a wishbone according to Claim 5 or 8,
**characterised in that**
the threaded nut (16) in the mounted state is arranged essentially within a recess (23) in the ball stud body (8).

10. Central joint for a wishbone according to Claim 1,
**characterised in that**
the extended load-bearing threaded region (19) of the threaded nut (16) is arranged in the mounted state within a region (20) of widened diameter of the through-bore (13).

11. Central joint for a wishbone according to Claim 1,
**characterised in that**
the ball stud (6) has a flange (30) with a centring attachment (31) on its end which faces away from the joint ball (7).

12. Central joint for a wishbone according to Claim 1,
**characterised in that**
a sliding layer (25), preferably consisting of a plastic, is arranged between the bearing shell (24) and the joint ball (7).

13. Central joint for a wishbone according to one of Claims 1 to 9,
**characterised in that**
the bearing shell (7) is arranged without play in the joint housing (3) by means of a securing ring (26) which is configured with an outer face (28), which has a conical configuration at least on one side, and which engages in the joint housing (3) in a groove (27) with an inner wall (29) which is conical at least on one side.

## Revendications

1. Articulation, centrale (1) pour un bras transversal triangulaire de véhicules automobiles, en particulier de véhicules utilitaires, comprenant un pivot sphérique (6) réceptionné dans un boîtier d'articulation (3),
- le boîtier d'articulation (3) étant constitué d'un corps de boîtier d'articulation (4) et d'un fond de boîtier d'articulation (5) et
- le pivot sphérique (6) étant constitué d'un corps de pivot sphérique (8) en forme de tour et d'une boule d'articulation (7) posée sur le corps de pivot sphérique (8), le corps de pivot sphérique (8) étant formé de façon cylindrique sur son extrémité (9) associée à la boule d'articulation (7) et cette extrémité (9) étant insérée dans un évidement (10), formé également de façon cylindrique, de la boule d'articulation (7) et
- le pivot sphérique (6) étant logé dans une coquille de coussinet (24) fixée dans le boîtier d'articulation (7) de façon mobile en pivotement et en rotation et
- le boîtier d'articulation (3) comprenant le corps de boîtier d'articulation (4) et le fond de boîtier d'articulation (5) est réalisé d'une seule pièce et
- la boule d'articulation (7) est reliée au corps de pivot sphérique (8) au moyen d'un assemblage vissé (11),
**caractérisée en ce que**
l'extrémité (9) cylindrique du corps de pivot sphérique (8) forme avec une face frontale (18) une butée pour le logement de la boule d'articulation (7), de sorte que le fond (17) de la boule d'articulation (7) vient en appui contre une face avant (18) de l'extrémité (9) cylindrique du corps de pivot sphérique (8).

2. Articulation centrale pour un bras transversal triangulaire selon la revendication 1,
**caractérisée en ce que**
le corps de pivot sphérique (8) et la boule d'articulation (7) sont en liaison active l'un avec l'autre au moyen d'une liaison par complémentarité de formes, en particulier un profil dentelé, un profil polygonal ou un profil d'angle de repérage.

3. Articulation centrale pour un bras transversal triangulaire selon la revendication 1,
**caractérisée en ce que**
le diamètre de l'extrémité (9) cylindrique du corps de pivot sphérique (8) est supérieur au diamètre intérieur de l'évidement (10) cylindrique de la boule d'articulation (7).

4. Articulation centrale pour un bras transversal triangulaire selon la revendication 1 ou 2,
**caractérisée en ce que**
une liaison de pressage agit entre le corps de pivot sphérique (8) et la boule d'articulation (7).

5. Articulation centrale pour un bras transversal triangulaire selon la revendication 1,
**caractérisée en ce que**
l'assemblage vissé (11) est formé d'une goupille filetée (12), qui traverse un trou de passage (13) du corps de pivot sphérique (8), coopère sur une extrémité avec un taraudage (14) dans la boule d'articulation (7) et est fixé sur le côté, opposé à la boule d'articulation (7), du corps de pivot sphérique (8) avec un écrou fileté (16) en face du corps de pivot sphérique (8).

6. Articulation centrale pour un bras transversal triangulaire selon la revendication 5,
**caractérisée en ce que**
l'alésage fileté (14) présente dans la boule d'articulation (7) une butée (15) contre laquelle la tige filetée (12) est vissée dans l'alésage fileté (14).

7. Articulation centrale pour un bras transversal triangulaire selon la revendication 5,
**caractérisée en ce que**
le taraudage (14) est disposé dans la zone d'un épaississement de matériau (21) d'un fond de boule d'articulation (17) de la boule d'articulation (7), le corps de pivot sphérique (8) présentant sur son extrémité (9) cylindrique un évidement (22), à l'intérieur duquel l'épaississement de matériau (21) est disposé de préférence dans l'état de montage.

8. Articulation centrale pour un bras transversal triangulaire selon la revendication 5,
**caractérisée en ce que**
l'écrou fileté (18) présente une zone filetée (19) prolongée.

9. Articulation centrale pour un bras transversal triangulaire selon la revendication 5 ou 8,
**caractérisée en ce que**
l'écrou fileté (16) est disposé, dans l'état monté, essentiellement à l'intérieur d'un évidement (23) du corps de pivot sphérique (8).

10. Articulation centrale pour un bras transversal triangulaire selon la revendication 1,
**caractérisée en ce que**
la zone filetée (19) porteuse et prolongée de l'écrou fileté (16) est disposée, dans l'état de montage, à l'intérieur d'une zone (20) élargie au niveau du diamètre de l'alésage de passage (13).

11. Articulation centrale pour un bras transversal triangulaire selon la revendication 1,
**caractérisée en ce que**
le pivot sphérique (6) présente sur son extrémité opposée à la boule d'articulation (7) une bride (30) avec une embase de centrage (31).

12. Articulation centrale pour un bras transversal triangulaire selon la revendication 1,
**caractérisée en ce que**
une couche de glissement (25), de préférence à base d'un plastique, est disposée entre la coquille de coussinet (24) et la boule d'articulation (7).

13. Articulation centrale pour un bras transversal triangulaire selon l'une quelconque des revendications 1 à 9,
**caractérisée en ce que**
la coquille de coussinet (7) est disposée sans jeu dans le boîtier d'articulation (3) au moyen d'une bague de sûreté réalisée au moins avec une surface extérieure (28) réalisée en forme de cône sur un côté, laquelle bague s'engage dans une rainure (27) avec une paroi intérieure (29) au moins unilatérale et en forme de cône dans le boîtier d'articulation (3).
